(19) Europäisches Patentamt
European Patent Office
Office européen des brevets

(11) EP 1 712 575 A1

# (12) EUROPÄISCHE PATENTANMELDUNG

(43) Veröffentlichungstag:
**18.10.2006 Patentblatt 2006/42**

(51) Int Cl.:
***C08G 18/28*** *(2006.01)* ***C08G 18/78*** *(2006.01)*
***C09D 175/06*** *(2006.01)*

(21) Anmeldenummer: **06006994.5**

(22) Anmeldetag: **31.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **13.04.2005 DE 102005016982**

(71) Anmelder: **Bayer MaterialScience AG**
**51368 Leverkusen (DE)**

(72) Erfinder:
- **Mager, Dieter**
  **51373 Leverkusen (DE)**
- **Mundstock, Holger**
  **42929 Wermelskirchen (DE)**
- **Niesten, Meike, Dr.**
  **51061 Köln (DE)**
- **Schmitz, Jörg, Dr.**
  **51065 Köln (DE)**

## (54) Orthoestergruppenhaltige Bindemittel

(57) Die vorliegende Erfindung betrifft neue Allophanate mit NCO- und Polyorthoestergruppen, ein Verfahren zu deren Herstellung und ihre Verwendung.

EP 1 712 575 A1

## Beschreibung

Die vorliegende Erfindung betrifft neue Allophanate mit NCO- und Polyorthoestergruppen, ein Verfahren zu deren Herstellung und ihre Verwendung.

Die Verwendung von Polyorthoestern und bicyclischen Orthoestern (BOE) als blockierte Polyole in Polyurethanlacken ist bekannt (EP-A 0 882 106, EP-A 1 225 172, nicht vorveröffentlichte deutsche Patentanmeldung DE 10 200 400 34 95).

Unter Einfluss von Luftfeuchtigkeit deblockieren (hydrolysieren) die Polyorthoester- und BOE-Gruppen wobei Hydroxylgruppen freigesetzt werden, die anschließend für die Vernetzung mit Polyisocyanaten verfügbar sind.

EP-A 0 882 106 beschreibt auch den Einsatz von bicyclischen Orthoestern als abspalterfreie Reaktivverdünner in Polyurethan Lacksystemen.

Aus WO 99/10397 A1 und DE 10 200 400 34 95 sind Verbindungen bekannt, die neben bicyclischen Orthoestergruppen bzw. Polyorthoestergruppen auch freie NCO-Gruppen aufweisen, so dass diese nach Deblockierung der latenten OH-Gruppen selbstvernetzend ausgehärtet werden können.

Die selbstvernetzenden Systeme aus DE 10 200 400 34 95 basieren auf Polyorthoestergruppen und haben den Vorteil gegenüber den schnell vernetzenden Systemen aus WO 99/10397 basierend auf bicyclischen Orthoestergruppen, dass das Herstellungsverfahren technisch wesentlich einfacher und daher kommerziell interessanter ist.

Für Autoreparaturlacke sind schnell trocknende Lacke mit hoher Härte und guter Chemikalienbeständigkeit gefragt. Diese basieren bevorzugt auf linearaliphatischen Isocyanaten. Für die Erhöhung der Produktivität ist vor allem eine noch schnellere Trocknung gefragt als bislang mit 2K-PUR Lacken erreicht werden konnte. Ferner sind aus Gründen der Applikationssicherheit möglichst lange Topfzeiten gefragt.

Es wurde nun gefunden dass Allophanate aus aliphatischen Isocyanaten und hydroxyfunktionellen Polyorthoestern zu selbstvernetzenden Addukten mit verkappten OH- und freien NCO-Gruppen führen, welche sich als Bindemittel in schnell trocknenden Polyurethanbeschichtungssystemen mit hoher mechanischer und hoher Chemikalenbeständigkeit einsetzen lassen.

Gegenstand der Erfindung ist daher ein Verfahren zur Herstellung von allophanatgruppenhaltigen Bindemitteln, die neben freien NCO-Gruppen auch Polyorthoestergruppen aufweisen, bei dem

A) ein oder mehrere aliphatische und/oder cycloaliphatische Polyisocyanate mit

B) einem oder mehreren Polyorthoestem, welche pro Molekül mindestens eine hydroxyfunktionelle Gruppe aufweisen

zu einem NCO-funktionellen Polyurethan umgesetzt werden und anschließend die vorliegenden Urethangruppen ganz oder teilweise zu Allophanatgruppen umgesetzt werden.

Beispiele für geeignete aliphatische bzw. cycloaliphatische Polyisocyanate (A) sind Di- oder Triisocyanate wie z.B. Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) oder cyclische Systeme, wie z.B. 4,4'-Methylenbis(cyclohexylisocyanat), 3,5,5-Trimethyl-1-isocyanato-3-isocyanatomethylcyclohexan (Isophorondiisocyanat, IPDI) sowie ω.ω'-Diisocyanato-1,3-dimethylcyclohexan ($H_6XDI$).

Bevorzugt werden in der Komponente A Hexandiisocyanat (Hexamethylendiisocyanat, HDI), 4,4'-Methylenbis (cyclohexylisocyanat) und/oder 3,5,5-Trimethyl-1-isocyanato-3-isocyanatomethylcyclohexan (Isophorondiisocyanat, IPDI) als Polyisocyanate eingesetzt. Ein ganz besonders bevorzugtes Polyisocyanat ist HDI.

Die in B) eingesetzten hydroxyfunktionellen Polyorthoester werden erhalten, in dem

B1) ein oder mehrere acyclische Orthoester mit

B2) niedermolekularen Polyolen einer Funktionalität von 4 bis 8 und einem zahlenmittleren Molekulargewicht von 80 bis 500 g/mol und gegebenenfalls

B3) einem 1,3 Diol, wobei die Hydroxylgruppen durch mindestens 3 Kohlenstoffatome voneinander getrennt sind und/oder einem Triol,
gegebenenfalls in Anwesenheit von

B4) Katalysatoren

umgesetzt werden.

Dabei werden Oligomerengemische von Orthoestern erhalten, die nicht nur wie der reine Orthoester bicyclische

Strukturen sondern auch offenkettige Strukturen enthalten. Der Vorteil an dieser Oligomerenmischung sind ihre tendenziell besseren anwendungstechnischen Eigenschaften sowie ihre technisch deutlich bessere und einfachere Herstellbarkeit als die der reinen bicyclischen Orthoestern als idealen Umesterungsprodukten aus 1 mol acyclischem Orthoester und 1 mol eines wenigstens tetrafunktionellen Alkohols.

In Komponente B1) können beispielsweise Orthoameisensäuretriethylester, Orthoameisensäuretrüsopropylester, Orthoameisensäuretripropylester, Orthobuttersäuretrimethylester, Orthoessigsäuretriethylester, Orthoessigsäuretrimethylester, Orthopropionsäuretriethylester, Orthovaleriansäuretrimethylester eingesetzt werden. Bevorzugt ist die Verwendung von Orthoameisensäuretriethylester, Orthoessigsäuretriethylester, Orthoessigsäuretrimethylester und/oder Orthopropionsäuretriethylester, besonders bevorzugt sind Orthoessigsäuretriethylester und Orthopropionsäuretriethylester.

Die vorstehend genannten Verbindungen können in Komponente B1) einzeln oder in beliebigen Mischungen untereinander eingesetzt werden.

Beispielhaft seien als Verbindungen der Komponente B2) Pentaerythrit, Di-Trimethylolpropan, Erythritol, Diglycerid, Bis(trimethylolpropan), Di-Pentaerythritol, Mannit oder Methylglykosid genannt. Bevorzugt wird in B2) Pentaerythrit eingesetzt.

Beispiele für 1,3-Diole der Komponente B3) sind Neopentylglykol, 2-Methyl-1,3-propandiol, 2-Methyl-2,4-pentandiol, 3-Methyl-1,3-Butandiol, 2-Ethyl-1,3-hexandiol, 2,2-Diethyl-1,3-propandiol, 2,2,4-Trimethyl-1,3-pentandiol, 2-Butyl-2-ethyl-1,3-propandiol, 2-Phenoxypropan-1,3-diol, 2-Methyl-2-phenylpropan-1,3-diol, 1,3-Propylenglykol, 1,3-Butylenglykol, Dimethylolpropionsäure, Dimethylolbutansäure, 2-Ethyl-1,3-oktandiol und 1,3-Dihydroxycyclohexan; Fettsäuremonoglycerid (β- Produkte) wie zum Beispiel Glycerin-monoacetat (β- Produkt) und Glycerin-monostearat (β- Produkt). Bevorzugt sind Neopentylglykol, 2-Methyl-1,3-propandiol, 2-Methyl-2,4-pentandiol, 3-methyl-1,3-butandiol, 2-ethyl-1,3-hexandiol, 2,2-diethyl-1,3-propandiol, 2,2,4-trimethyl-1,3-pentandiol und 2-butyl-2-ethyl-1,3-propandiol.

Beispiele für Triole der Komponente B3) sind 1,2,3-Propantriol, 1,2,4-Butantriol, 1,1,1-Trimethylolethan, 1,2,6-Hexantriol, 1,1,1-Trimethylolpropan. Polyester-basierende Triole mit einem zahlenmittleren Molekulargewicht von 100 bis 1000 g/mol. Letztere können beispielsweise aus den vorstehend genannten Triolen durch Reaktion mit Lactonen, wie c-Caprolacton, β-Propiolacton, γ-Butyrolacton, γ- und δ-Valerolacton, 3,5,5- und 3,3,5-Trimethylcaprolacton oder beliebigen Gemischen solcher Lactone, hergestellt werden. Bevorzugtes Triol der Komponente B3) ist Trimethylolpropan.

Das Äquivalentverhältnis von umzuesternden Gruppen der Verbindungen der Komponente B1) zu den OH-Gruppen der Verbindungen der Komponenten B2) und B3) beträgt 1:1,3 bis 1:1,5

Als Katalysatoren für die Umesterungsreaktion in Schritt B) können die dem Fachmann an sich bekannten Veresterungskatalysatoren, wie z.B. Säuren, Basen oder Übergangsmetallverbindungen, verwendet werden. Bevorzugt sind Lewis- oder Broenstedt-Säuren, besonders bevorzugt ist p-Toluolsulfonsäure.

Diese werden im erfindungsgemäßen Verfahren in Mengen von 0,001 bis 5 Gew.-%, bevorzugt 0,01 bis 1 Gew.-% bezogen auf die Summe der Mengen der Komponenten B1) - B3) verwendet.

Die Reaktionstemperatur der Umesterung in Schritt B) beträgt 50 bis 200°C, bevorzugt 75 bis 150°C. In einer bevorzugten Ausfiihrungsform der Erfindung wird der bei der Umesterung abgespaltene Alkolhol destillativ aus der Reaktionsmischung gegebenenfalls unter Anwendung von Vakuum entfernt. Auf diese Weise lässt sich neben der Gleichgewichtsverschiebung auch das Ende der Umesterungsreaktion leicht erkennen, da diese beendet ist, sobald kein Spaltprodukt (Alkohol) mehr überdestilliert.

Die Urethanisierung bei der Umsetzung von A) mit B) kann unter Verwendung von dem Fachmann an sich aus der Polyurethanchemie bekannten Katalysatoren durchgeführt werden. Beispiele sind Zinn-Seifen, wie Dibutylzinndilaurat, oder tertiäre Amine, wie Triethylamin oder Diazabicyclooctan.

Das NCO/OH-Verhältnis der Komponenten A) und B) zueinander ist typischerweise > 1, bevorzugt 1 : 4 bis 1 : 20, besonders bevorzugt 1 : 4 bis 1 : 15, ganz besonders bevorzugt 1 : 4 bis 1 : 10.

Die Temperatur bei der Urethanisierung beträgt typischerweise 20 bis 140°C, bevorzugt 40 bis 100°C.

Die Allophanatisierung erfolgt dann anschließend durch Umsetzung des isocyanatgruppenhaltigen Polyurethan unter Einwirkung von bevorzugt Zinn oder Zink(II)-Verbindungen oder quartären Ammoniumverbindungen als Allophanatisierungskatalysatoren. Dabei allophanatisieren die vorliegenden Urethangruppen ganz oder teilweise durch Reaktion mit freien NCO-Gruppen. An dieser Stelle können zusätzlich zu den bereits in A) zugegebenen Isocyanaten weitere und gegebenenfalls von denen aus A) verschiedene Isocyanate zugegeben werden.

Die Temperatur bei der Allophanatisierung beträgt typischerweise 20 bis 140°C, bevorzugt 40 bis 100°C.

Nach beendeter Allophanatisierung kann überschüssiges nicht umgesetztes Di- oder Polyisocyanat, z.B. durch Dünnschichtdestillation oder Extraktion aus dem Produkt entfernt werden. Die Dünnschichtdestillation ist das bevorzugte Verfahren zur Abtrennung und sie wird in der Regel bei Temperaturen von 100 bis 160 °C und einem Druck von 0,01 bis 3 mbar durchgeführt. Der Restmonomergehalt beträgt danach bevorzugt weniger als 1 Gew.-%, besonders bevorzugt weniger als 0,5 Gew.-% (Diisocyanat).

Bevorzugt werden zur Allophanatisierung Zinn oder Zink(II)-Verbindungen als Katalysatoren eingesetzt, wobei dies bevorzugt Zink-Seifen längerkettiger, verzweigter oder unverzweigter, aliphatischer Carbonsäuren sind. Besonders

bevorzugte Zink(II)-Seifen sind solche auf Basis von 2-Ethylhexansäure sowie den linearen, aliphatischen $C_4$- bis $C_{30}$-Carbonsäuren. Ganz besonders bevorzugte Zink(II)-Seifen sind Zn(II)bis(2-ethylhexanoat), Zn(II)bis(n-oktoat), Zn (II)bis(stearat) oder deren Mischungen.

Ebenfalls bevorzugte Allophanatisierungskatalysatoren sind quartäre Ammoniumsalze, bevorzugt quaternäre Ammoniumhydroxide der allgemeinen Formel

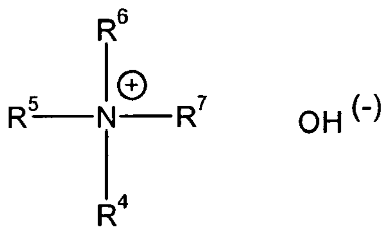

in welcher

$R^4$ für einen Alkylrest mit 1 bis 20, vorzugsweise 4 bis 12 Kohlenstoffatomen, einen araliphatischen Kohlenwasserstoffrest mit 7 bis 10, vorzugsweise 7 Kohlenstoffatomen oder einen gesättigten cycloaliphatischen Kohlenwasserstoffrest mit 4 bis 10, vorzugsweise 5 bis 6 Kohlenstoffatomen steht, von denen jeder mit Hydroxy- und/oder Hydroxyalkylgruppen mit 1 bis 4 Kohlenstoffatomen substituiert sein kann;

$R^5$, $R^6$ und $R^7$ für gleiche oder verschiedene Reste stehen und gegebenenfalls hydroxylsubstituierte Alkylreste mit 1 bis 20, vorzugsweise 1 bis 4 Kohlenstoff atomen bedeuten, wobei zwei der genannten Reste $R^5$, $R^6$ oder $R^7$ auch zusammen mit dem Stickstoffatom gegebenenfalls zusammen mit einem Sauerstoff- oder einem weiteren Stickstoffatom einen heterocyclischen Ring mit 3 bis 5 Kohlenstoffatomen bilden können oder wobei die Reste $R^5$, $R^6$ und $R^7$ jeweils für Ethylenreste stehen, die zusammen mit dem quaternären Stickstoffatom und einem weiteren tertiären Stickstoffatom ein bicyclisches Triethylendiamin (DABCO) Gerüst bilden können.

Bevorzugte quaternäre Ammoniumhydroxide sind solche der obengenannten Formel, wobei die Reste $R^5$, $R^6$ und $R^7$ die bereits genannte Bedeutung haben, jedoch mit der Maßgabe, dass mindestens einer der genannten Reste mindestens eine aliphatisch gebundene Hydroxylgruppe aufweist, die vorzugsweise in 2-Stellung zum quaternären Stickstoffatom angeordnet ist, wobei der hydroxylsubstituierte Rest, bzw. die hydroxylsubstituierten Reste außer den Hydroxyl-Substituenten auch beliebige andere Substituenten, insbesondere $C_1$-$C_4$-Alkoxy-Substituenten, aufweisen können.

Besonders bevorzugte quaternäre Ammoniumhydroxide sind solche der obengenannten Formel, in welchen die Reste $R^4$, $R^5$ und $R^6$ jeweils für Alkylreste der genannten Art und $R^7$ einen Hydroxyethyl-, Hydroxypropyl- oder Hydroxybutylrest bedeuten, in welchem die Hydroxylgruppe vorzugsweise in 2-Stellung zum quaternären Stickstoffatom angeordnet ist.

Beispiele geeigneter quaternärer Ammoniumhydroxide sind Benzyltrimethylammoniumhydroxyid, Tetramethyl-, Tetraethyl-, Trimethylstearyl-, Dimethylethyl-cyclohexyl-ammoniumhydroxid, N,N,N-Trimethyl-N(2- hydroxyethyl)-, N,N,N-Trimethyl-N-(2-hydroxypropyl)-, N,N,N-Trimethyl-(2- hydroxybutyl)-ammoniumhydroxid, N,N-Dimethyl-N-dodecyl-N-(2-hydroxyethyl)-ammoniumhydroxid, N-(2-Hydroxyethyl)-N,N-dimethyl-N-(2, 2'dihydroxymethylbutyl)-ammoniumhydroxid, N-Methyl-2hydroxyethyl- morpholiniumhydroxid, N-Methyl-N-(2-hydroxypropyl)- pyrrolidiniumhydroxid, N-Dodecyl-trisN-(2-hydroxyethyl)-ammoniumhydroxid, Tetra-(2-hydroxyethyl)-ammoniumhydroxid, sowie die Verbindungen der Formel

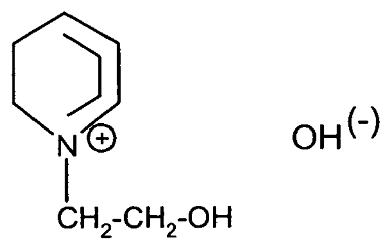

die das Monoaddukt von Ethylenoxid und Wasser an DABCO darstellt.

Neben den bevorzugtem vorstehend genannten Hydroxyalkylammoniumhydroxiden ist auch Benzyltrimethylammoniumhydroxid (Triton B) ein bevorzugtes quartäres Ammoniumhydroxid.

Die Allophanatisierungskatalysatoren werden im allgemeinen in einer Menge von 0,0001 bis 2, vorzugsweise 0,001 bis 1 Gew.-%, bezogen auf das eingesetzte Diisocyanatgemisch eingesetzt.

Insbesondere bei Verwendung von quaternären Ammoniumhydroxiden als Katalysatoren werden diese in in geeigneten Lösungsmitteln gelöster Form eingesetzt. Als Lösungsmittel eignen sich beispielsweise Toluol, Dimethylformamid, Dimethylsulfoxid oder auch Mischungen davon, die in Mengen von maximal 5 Gew.-%, bezogen auf eingesetztes Isocyanatgemisch, eingesetzt werden, und im Anschluss an die Umsetzung, gegebenenfalls zusammen mit den überschüssigen Diisocyanaten, destillativ entfernt werden.

Gegebenenfalls können nach der Allophanatisierung auch stabilisierend wirkende Zusätze verwendet werden. Dies sind beispielsweise saure Additive wie Lewis-Säuren (Elektronenmangelverbindungen) oder Broenstedt-Säuren (Protonensäuren) oder solche Verbindungen sein, welche unter Reaktion mit Wasser derartige Säuren freisetzen.

Letzteres sind beispielsweise anorganische oder organische Säuren oder auch neutrale Verbindungen wie Säurehalogenide oder Ester sein, welche mit Wasser zu den entsprechenden Säuren reagieren. Genannt seien hier insbesondere Salzsäure, Phosphorsäure, Phosphorsäureester, Benzoylchlorid, Isophtalsäuredichlorid, p-Toluolsulfonsäure, Ameisensäure, Essigsäure, Dichloressigsäure und 2-Chlorpropionsäure.

Die vorgenannten sauren Additive werden zur Deaktivierung des Allophanatisierungskatalysators eingesetzt. Sie verbessern darüber hinaus die Stabilität der erfindungsgemäß hergestellten Allophanate, z.B. bei thermischer Belastung während der Dünnschichtdestillation oder auch nach der Herstellung bei Lagerung der Produkte.

Die sauren Additive werden in der Regel mindestens in einer solchen Menge zugegeben, dass das Molverhältnis der sauren Zentren des sauren Additivs und des Katalysators mindestens 1:1 1 beträgt. Vorzugsweise wird jedoch ein Überschuss des sauren Additivs zugesetzt.

Sofern überhaupt saure Additive verwendet werden, sind dies bevorzugt organische Säuren wie Carbonsäuren oder Säurehalogenide wie Benzoylchlorid oder Isophtalyldichlorid.

Die gesamten Verfahrensschritte können gegebenenfalls in Anwesenheit inerter Lösungsmittel durchgeführt werden. Als inerte Lösungsmittel sind dabei solche zu verstehen, die unter den gegebenen Reaktionsbedingungen nicht mit den Edukten reagieren. Beispiele sind Ethylacetat, Butylacetat, Methoxypropylacetat, Methylethylketon, Methylisobutylketon, Toluol, Xylol, aromatische oder (cyclo-) aliphatische Kohlenwasserstoffgemische oder beliebige Gemische derartiger Lösungsmittel. Bevorzugt werden die erfindungsgemäßen Umsetzungen jedoch lösemittelfrei durchgeführt.

Die nach dem erfindungsgemäßen Verfahren erhältlichen Allophanate sind ein weiterer Gegenstand der Erfindung.

Diese erfindungsgemäßen funktionellen Polymere stellen vielseitige Ausgangsmaterialien für die Herstellung von niedrigviskosen, lösemittelarmen und abspalterfreien Polyurethansystemen dar, wobei diese als selbstvernetzende Systeme formuliert werden können.

Daher sind ein weiterer Gegenstand der Erfindung Beschichtungsmittel wenigstens enthaltend

a) einen oder mehrere polyorthoester- und gegebenenfalls NCO-gruppenhaltige Allophanate gemäß Erfindung,

b) Katalysatoren

c) gegebenenfalls Hilf- und Zusatzstoffe.

Als Katalysatoren in b) können einzelne Katalysatortypen oder aber auch Mischungen mehrerer unterschiedlich reagierender Katalysatoren eingesetzt werden.

Für die Katalyse der Deblockierungsreaktion zur Freisetzung der verkappten OH-Gruppen werden typischerweise Säureverbindungen eingesetzt.

Dies können zum Beispiel sein: anorganische Säuren wie Chlorwasserstoff, Schwefelsäure, Salpetersäure;

Sulfonsäuren wie Methansulfonsäure, Ethansulfonsäure, Paratoluolsulfonsäure, Dodecylbenzolsulfonsäure, Dinonylnaphtalenesulfonsäure und Dinonylnaphthalendisulphonsäure; Carbonsäuren wie Ameisensäure, Essigsäure, Propionsäure, Butansäure, 2-Ethylhexansäure und Octansäure; organische phosphorsäurebasierte Verbindungen wie Monobutylphosphat, Dibutylphosphat, Monoisopropylphosphate, Diisopropylphosphate, Monooctylphosphate, Dioctylphosphate, Monodecylphosphate, Didecylphosphate, Metaphosphorsäure, Orthophosphorsäure, Pyrophosphorsäure, Trimethylphosphate, Triethylphosphat, Tributylphosphate, Trioctyphosphat, Tributoxyethylphosphate, tris-chloroethylphosphat, Triphenyphosphat und Tricresylphosphat; und Lewissäuren.

Des weiteren können auch Neutralisationsprodukte der vorstehend genannten Säuren mit Aminen in Komponente b) als Säurekatalysatoren eingesetzt werden.

Ebenfalls möglich ist die Verwendung von Sulfonsäureestern der vorstehend genannten Sulfonsäuren mit primären, sekundaren oder tertiären Alkoholen wie n-Propanol, n-Butanol, n-Hexanol, n-Octanol, Isopropanol, 2-Butanol, 2-Hexanol, 2-Octanol, Cyclohexanol, tert-Butanol sowie die Umsetzungprodukte der genannten Sulfonsäuren mit oxirangruppenhaltigen Verbindungen wie Glycidylacetat oder Butylglycidylether, wobei β-Hydroxyalkylsulfonsäureester erhalten werden.

Als Säurekatalysatoren werden in Komponente b) bevorzugt die vorstehend genannten sulfonsäure- und phosphorsäurebasierenden Verbindungen eingesetzt.

Ganz besonders bevorzugt ist die Verwendung von Dodecylbenzolsulfonsäure.

Neben den Säurekatalysatoren können in b) auch Katalysatoren zur Beschleunigung der NCO/OH-Reaktion von freigesetzten latenten OH-Gruppen mit NCO-Gruppen verwendet werden. Diese sind dem Fachmann aus der Polyurethanchemie an sich bekannt. Dies können zum Beispiel sein: tertiäre Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octoat, Zinn(II)-ethylcaproat, Zinn(II)-palmitat, Dibutylzinn(IV)-dilaurat und Molybdänglykolat oder beliebige Gemische solcher Katalysatoren.

Bevorzugt wird in b) eine Kombination von Säure- und NCO/OH-beschleunigenden Katalysatoren verwendet.

Die Menge der Komponente b) bezogen auf die Menge der Verbindungen der Komponenten a) und b) beträgt typischerweise 0,001 bis 5 Gew.-%, bevorzugt 0,01 bis 1 Gew.%.

Ggf. in Komponente c) enthaltene Hilfs- und Zusatzstoffe können z. B. oberflächenaktive Substanzen, interne Trennmittel, Füllstoffe, Farbstoffe, Pigmente, Flammschutzmittel, Hydrolyseschutzmittel, Mikrobizide, Verlaufshilfsmittel, Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin® 292 und Tinuvine 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen sein.

Bei der Herstellung der erfindungsgemäßen Beschichtungsmittel werden die Komponenten a), b) und c) miteinander vermischt und gegebenenfalls die üblichen Hilfs- und Zusatzstoffe zugemischt.

Beschichtungsmittel basierend auf den erfindungsgemäßen polyorthoester- und gegebenenfalls NCO-gruppenhaltigen Polymeren eignen sich zur Beschichtung einer Vielzahl von Materialien und Substraten.

Die Applikation kann dabei nach an sich bekannten Methoden wie beispielsweise durch Spritzen, Streichen, Fluten oder mit Hilfe von Walzen oder Rakeln auf beliebige Substrate erfolgen. Als Substrate eignen sich beispielsweise Metall, Holz, Glas, Stein, keramische Materialien, Beton, harte und flexibele Kunststoffe, Textilien, Leder oder Papier.

Die Aushärtung kann bei Raumtemperatur oder bei erhöhter Temperatur ausgeführt werden.

Alle Mengenangaben sind, soweit nicht anders vermerkt, als Gewicht in Gramm zu verstehen.

Alle Prozentangaben sind sofern nicht abweichend vermerkt als Gewichtsprozent zu verstehen.

Die Ermittlung des NCO-Gehaltes der in den Beispielen und Vergleichsbeispielen beschriebenen Harze erfolgte durch Titration gemäß DIN 53 185.

In Abbildung 1 wird gezeigt dass fiir jede Polyorthoestergruppe eine OH-Gruppe freigesetzt wird nach Hydrolyse

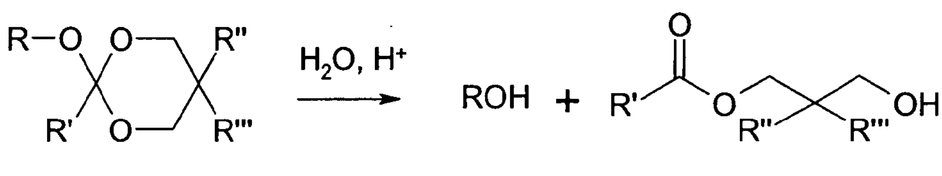

Abbildung 1: Hydrolyse (Deblockierung) Polyorthoester

Der Gehalt an latenten OH-Gruppen wurde theoretisch berechnet mit folgender Gleichung

$$\text{OH} - \text{Gehalt} = \frac{2x17x100}{\text{Masse Produkt ausgehend von 1 Mol TEOA}}$$

Zur Kontrolle des NCO-Umsatzes wurden Proben der Reaktionslösung mittels FT-IR-Spektrometer (Perkin Elmer, Paragon 1000, England) vermessen und anhand der NCO-Bande bei 2270 $cm^{-1}$ das Vorliegen freier NCO-Gruppen detektiert.

Die dynamischen Viskositäten wurden bei 23°C mit einem Rotationsviskosimeter (ViscoTester® 550, Thermo Haake GmbH, D-76227 Karlsruhe) bestimmt.

Die Pendelhärte nach König wurde nach DIN 53157 bestimmt.

Der Festkörpergehalt wurde nach DIN EN ISO 3251 bestimmt (1g Probe, Trocknungszeit im Umluftofen 1 Stunde bei 125°C).

Als Maß für die Verarbeitungszeit wurde die Auslaufzeit nach DIN 53211 bestimmt.

Die Trocknungsgeschwindigkeit wurde nach DIN 53150, DIN EN ISO 1517 bestimmt.

**Edukte:**

TEOA: Triethylorthoacetat
BEPD: 2-Butyl-2-ethyl-1,3-propandiol
pTSA: para-Toluolsulfonsäure
MPA: Methoxypropylacetat
DBTL: Dibutylzinndilaurat
HDI: Hexamethylendiisocyanat
Byk® 333, 355, 331 und 141: Verlaufshilfsmittel der Firma Byk Chemie, Wesel, DE

Polyisocyanat A:

Desmodur® VPLS 2102: HDI Allophanat mit einem NCO-Gehalt von 20,0 % und einer Viskosität bei 23°C von 300 mPa.s, Bayer AG, Leverkusen, DE.

**Beispiel 1**: Addukt (1)

Teil 1 der Reaktanden zur Adduktherstellung wurde gemäß unterstehender Tabelle 1 zusammen in einen Reaktor, der mit Rührer, Heizung, automatischer Temperatursteuerung, Stickstoffeinleitung und Destillierkolone ausgerüstet war, eingewogen und unter Rühren und Durchleiten von Stickstoff auf 85°C aufgeheizt. Die Temperatur wurde langsam erhöht bis 120°C, wobei Ethanol abdestilliert wurde. Nach 4 bis 6 Stunden war die Ethanol-Destillation beendet und ein Vakuum von 500 mbar bei 120°C wurde angelegt, um das restliche Ethanol abzudestillieren.

Anschließend wurde das Produkt innerhalb 1 Stunde bei 100°C zu Teil 3 und 0,16 Gramm Dibutylzinnlaureat und 0,6 gramm Jonol zugetropft. Das Reaktionsgemisch wurde 3 Stunden nachgerührt bis ein theoretischer NCO-Gehalt von 36,1 Gew.-% erreicht wurde. Dann wurden 0,16 Gramm einer 10 gew.-%-igen Lösung Zinkoctoat in Ethanol in 2 Portionen im Abstand von 5 Minuten zugegeben und die Reaktion wurde bei 105 bis 110 °C zu einem NCO-Gehalt von 32,1 Gew.% weitergeführt. Zum Schluss wurde 0,1 g Benzoylchlorid zugegeben. Der Überschuss HDI wurde mittels Dünnschichtdestillation enfernt. Das Produkt wurde in Butylacetat (80%-ig) gelöst. Der NCO-Gehalt ist 10,1 %, der latente OH-Gehalt 5% und die Viskosität bei 23°C 565 mPa.s.

**Beispiel 2:** Addukt 2 (Vergleich)

Teil 1 der Reaktanden zur Adduktherstellung wurde gemäß unterstehender Tabelle 1 zusammen in einen Reaktor, der mit Rührer, Heizung, automatischer Temperatursteuerung, Stickstoffeinleitung und Destillierkolone ausgerüstet war, eingewogen und unter Rühren und Durchleiten von Stickstoff auf 85°C aufgeheizt. Die Temperatur wurde langsam bis 120°C erhöht, wobei Ethanol abdestilliert wurde. Nach 4 bis 6 Stunden war die Ethanol-Destillation beendet und ein Vakuum von 500 mbar bei 120°C wurde angelegt, um das restliche Ethanol abzudestillieren. Anschließend wurde Butylacetat (Teil 2) zugegeben. Bei 120°C wurde das Polyisocyanat (Teil 3) zugetropft und die Reaktion bei 120°C weitergefahren bis der theoretische NCO-Gehalt erreicht wurde.

**Tabelle 1**: Polyorthoester-Allophanat

| **Addukt** | 1 | 2 |
|---|---|---|
| **Teil 1:** | | |
| TEOA | 122 g | 162 g |
| Pentaerythrit | 77 g | 136 g |
| BEPD | 60 | - |
| pTSA | - | - |
| Ethanol | -104 g | - 138 g |
| **Teil 2** | | |
| Butylacetat | | 198 g |
| **Teil 3** | | |
| HDI | 630 | |
| Polyisocyanat A | | 630 g |
| Festkörper | 80 % | 80 % |
| NCO-Gehalt | 10,1 % | 8,3 % |
| Latenter OH-Gehalt | 5,0% | 3,4% |
| Viskosität @ 23°C | 565 mPas | 380 mPas |

Lackherstellung

Die Addukte (1) und (2) wurden gemäß nachfolgender Tabelle mit handelsüblichen Lackadditiven, Katalysatoren und gegebenenfalls Polyisocyanaten unter Rühren versetzt, anschließend mit einem 150 μm Rakel auf Glas appliziert und 10 min bei 60°C ausgehärtet (Beispiel 3 und Vergleichsbeispiel 4).

Die Chemikalienbeständigkeit der so hergestellten Lackfilme wurde derart bestimmt, dass ein mit Lösemittel getränkter Wattebausch für 1 bzw. 5 min. auf den applizierten Lackfilm gelegt wurde. Nach dieser Zeit wurde der Lackfilm mit einem Tuch trockengewischt und in einer Abstufung von 0-5optisch beurteilt (0 = keine Veränderung, 5: starke Anquellung).

Tabelle 2: Beschichtung & anwendungstechnische Daten

| **Beispiel** | **3** | **4** |
|---|---|---|
| Addukt 1 | 100 | |
| Addukt 2 (Vergleich) | | 100 |
| Byk® 331 | 0,16 | 0,16 |
| Byk® 141 | 1,00 | 1,00 |
| DBTL | 1,60 | 1,60 |
| MPA/Xylol/BA 1:1:1 | 32,11 | 34,99 |
| Dodecylbenzolsulfonsäure | 5,00 | 5,00 |
| **Festkörper** | 58 | 57 |
| **Auslaufzeit DIN4 (sec) nach** | | |
| 0,0 h | 18 | 21 |
| 1,0 | 16 | 19 |
| 2,0 | 17 | 19 |
| 3,0 | 18 | 20 |
| 4,0 | 18 | 20 |

(fortgesetzt)

| Beispiel | 3 | 4 |
|---|---|---|
| **Trocknungszeit RT** | | |
| T1 +min | 35 | 40 |
| T3+h | 50 | 85 |
| T4+h | 1,4 | 2,5 |
| **Pendelhärte** | | |
| 7 d RT | 55 | 17 |
| 30 min 60 °C | 87 | 16 |
| 7 d RT 16 h 70 °C | 127 | 76 |
| **Lösemittelbeständigkeit** (MP A/X/BA/MEK) | 0013 | 1113 |
| 0 = keine Veränderung, 5 = starke Anquellung | | |

Wie aus den Auslaufzeiten als Maß für die Verarbeitbarkeit und den Trocknungszeiten nach Applikation sehr deutlich wird, zeichnet sich das erfindungsgemäße Lacksystem (Beispiel 3) durch hohe Applikationssicherheit und schnelles Trocknungsverhalten aus, gleichzeitig sind die Härte und Chemikalienebständigkeit besser als die von Vergleichsbeispiel 4.

## Patentansprüche

**1.** Verfahren zur Herstellung von allophanatgruppenhaltigen Bindemitteln, die neben freien NCO-Gruppen auch Polyorthoestergruppen aufweisen, bei dem

A) ein oder mehrere aliphatische und/oder cycloaliphatische Polyisocyanate mit
B) einem oder mehreren Polyorthoestern, welche pro Molekül mindestens eine hydroxyfunktionelle Gruppe aufweisen

zu einem NCO-funktionellen Polyurethan umgesetzt werden und anschließend die vorliegenden Urethangruppen ganz oder teilweise zu Allophanatgruppen umgesetzt werden.

**2.** Verfahren gemäß Anspruch 1, **dadurch gekennzeichnet, dass** in A) Hexandiisocyanat (Hexamethylendiisocyanat, HDI), 4,4'-Methylenbis(cyclohexylisocyanat) und/oder 3,5,5-Trimethyl-1-isocyanato-3-isocyanatomethylcyclohexan (Isophorondiisocyanat, IPDI) als Polyisocyanate eingesetzt werden.

**3.** Verfahren gemäß Anspruch 1 oder 2, **dadurch gekennzeichnet, dass** der Polyorthoester B) zunächst hergestellt wird, in dem

B1) ein oder mehrere acyclische Orthoester mit
B2) niedermolekularen Polyolen einer Funktionalität von 4 bis 8 und einem zahlenmittleren Molekulargewicht von 80 bis 500 g/mol und gegebenenfalls
B3) einem 1,3 Diol, wobei die Hydroxylgruppen durch mindestens 3 Kohlenstoffatome voneinander getrennt sind und/oder einem Triol,
gegebenenfalls in Anwesenheit von
B4) Katalysatoren

umgesetzt werden und dann die Umsetzung mit dem Polyisocyanat A) erfolgt.

**4.** Verfahren gemäß Anspruch 3, **dadurch gekennzeichnet, dass** in B1) Orthoessigsäuretriethylester oder Orthopropionsäuretriethylester, in B2) Pentaerythrit und in B3) Neopentylglykol, 2-Methyl-1,3-propandiol, 2-Methyl-2,4-pentandiol, 3-methyl-1,3-butandiol, 2-ethyl-1,3-hexandiol, 2,2-diethyl-1,3-propandiol, 2,2,4-trimethyl-1,3-pentandiol, 2-Butyl-2-ethyl-1,3-propandiol und/oder Trimethylolpropan verwendet werden.

5. Verfahren gemäß einem der Ansprüche 1 bis 4, **dadurch gekennzeichnet, dass** das NCO/OH-Verhältnis der Komponenten A) und B) zueinander 1 : 4 bis 1 : 10 beträgt.

6. Verfahren gemäß einem der Ansprüche 1 bis 5, **dadurch gekennzeichnet, dass** als Allophanatisierungskatalysatoren Zinn- oder Zink(II)-Verbindungen oder quartäre Ammoniumverbindungen eingesetzt werden.

7. Verfahren gemäß Anspruch 6, **dadurch gekennzeichnet, dass** als Allophanatisierungskatalysator Benzyltrimethylammoniumhydroxid eingesetzt wird.

8. Allophanatgruppenhaltige Bindemittel erhältlich nach einem Verfahren gemäß einem der Ansprüche 1 bis 7.

9. Verwendung der allophanatgruppenhaltigen Bindemittel gemäß Anspruch 8 zur Herstellung von Beschichtungen, Kleb- und Dichtstoffen.

Europäisches Patentamt

# EUROPÄISCHER RECHERCHENBERICHT

Nummer der Anmeldung
EP 06 00 6994

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 204 051 A (GRUBER, HERMANN ET AL) 20. Mai 1980 (1980-05-20)<br>* Beispiel 9 *<br>* Spalte 6, Zeile 45 - Zeile 58 *<br>----- | 1-9 | INV.<br>C08G18/28<br>C08G18/78<br>C09D175/06 |
| X | WO 99/10397 A (AKZO NOBEL N.V; HOBEL, KLAUS; KLINKENBERG, HUIG; NOOMEN, ARIE) 4. März 1999 (1999-03-04)<br>* Beispiel 2C *<br>----- | 1-9 | |
| | | | RECHERCHIERTE SACHGEBIETE (IPC) |
| | | | C08G<br>C09D |

Der vorliegende Recherchenbericht wurde für alle Patentansprüche erstellt

| Recherchenort | Abschlußdatum der Recherche | Prüfer |
|---|---|---|
| München | 19. Juli 2006 | Müller, M |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 06 00 6994

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-2006

| Im Recherchenbericht angeführtes Patentdokument | Datum der Veröffentlichung | Mitglied(er) der Patentfamilie | Datum der Veröffentlichung |
|---|---|---|---|
| US 4204051 A | 20-05-1980 | KEINE | |
| WO 9910397 A | 04-03-1999 | AT 286083 T | 15-01-2005 |
| | | AU 753551 B2 | 24-10-2002 |
| | | AU 9534698 A | 16-03-1999 |
| | | BR 9811325 A | 19-09-2000 |
| | | CA 2300997 A1 | 04-03-1999 |
| | | CN 1267312 A | 20-09-2000 |
| | | DE 69828409 D1 | 03-02-2005 |
| | | DE 69828409 T2 | 01-12-2005 |
| | | ES 2235367 T3 | 01-07-2005 |
| | | JP 2001514276 T | 11-09-2001 |
| | | RU 2220155 C2 | 27-12-2003 |
| | | US 6979719 B1 | 27-12-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0882106 A
- EP 1225172 A
- DE 102004003495
- WO 9910397 A1
- WO 9910397 A


### In der Beschreibung aufgeführte Nicht-Patentliteratur


- **A. VALET.** Lichtschutzmittel für Lacke. Vincentz Verlag, 1996
- **H. ZWEIFEL.** Stabilization of Polymeric Materials. Springer Verlag, 1997, 181-213